# EUROPEAN PATENT APPLICATION

(11) **EP 1 333 629 A2**
(43) Date of publication of application: **06.08.2003**
(21) Application number: 03002165.3
(22) Date of filing: 03.02.2003
(51) Int. Cl.: H04L 12/56, H04B 7/26

(54) **Method and system for message propagation to a portable terminal**

(30) Priority: 05.02.2002 JP 2002028281
(71) Applicant: NEC Infrontia Corporation, Kawasaki-shi, Kanagawa (JP)
(72) Inventor: Yamanaka, Katsuhiro, Kawasaki-shi, Kanagawa (JP)
(74) Representative: VOSSIUS & PARTNER

(57) **Abstract**

An information propagation system allowing information notification destinations to fall within a certain range proximate to an information providing source without limiting the destinations to those in contact with the source and without expanding the destinations to many and unspecified destinations is provided. A fixed station or a portable information terminal transmits a message and a message transfer frequency to a portable information terminal. The portable information terminal transfers the message to a portable information terminal and subtracts the message transfer frequency by one, and further transfers the message to a portable information terminal and subtracts the message transfer frequency by one. The portable information terminal finishes transferring the message when the message transfer frequency reaches zero. The portable information terminal transfers the received message to a portable information terminal and subtracts the message transfer frequency by one. The portable information terminal also finishes transferring the message when the message transfer frequency reaches zero.

## Description

The present invention relates to a method and an apparatus for transmitting information to a limited range but wider than the range of a radio communication means which is a short-range radio communication means while using a portable information terminal including the short-range radio communication means.

If a request of "please contact me if you find a missing pet" is to be transmitted by an individual person or "special price information" is to be transmitted by a small-scale shop, it is a classical method to put up a poster in front of the person's house or shop.

Meanwhile, following the recent spread of the Internet, information can be delivered more widely by constructing an information server by an individual person, using a bulletin board system (BBS) available to every one or transmitting e-mails to many people.

However, if the former method is used, only the persons who chance to pass the poster can know the information. Since the pet actually moves around, the person who looks for the pet must want to let the poster known more widely. On the other hand, if the latter method is used, the range of spreading the information is so wide that the information is spread to many people who do not actually want and trouble actually occurs.

It is an object of the present invention to provide a method and an apparatus for delivering information to a certain limited range which a sender considers appropriate if the information to be transmitted is effective.

According to the first aspect of the present invention, there is provided a message propagation method comprising the steps of: transmitting a message from a message transmission source apparatus to a first portable terminal; and repeating transferring the message from an (i-1)^{th} portable terminal to i^{th} terminal encountering the (i-1)^{th} portable terminal in ascending order, for every i which is not greater than an integer n exceeding 1.

According to the second aspect of the present invention, there is provided a message propagation method, comprising the steps of: transmitting a message from a message transmission source apparatus to a first portable terminal; and repeating transferring the message from an (i-1)^{th} portable terminal to i^{th} terminal encountering the (i-1)^{th} portable terminal in ascending order, for an integer i exceeding 1 until a predetermined time elapses since the message is transmitted from the message transmission source apparatus to the first portable terminal.

According to the third aspect of the present invention, there is provided a message propagation system comprising a message transmission source apparatus and a plurality of portable terminals, wherein one of the portable terminals receives a message from the message transmission source apparatus, and transfer of the message is repeated between the portable terminals encountering each other until a transfer frequency reaches a predetermined frequency.

According to the fourth aspect of the present invention, there is provided a message propagation system comprising a message transmission source apparatus and a plurality of portable terminals, wherein one of the portable terminals receives a message from the message transmission source apparatus, and transfer of the message is repeated between the portable terminals encountering each other until the predetermined time elapses.

According to the fifth aspect of the present invention, there is provided a portable terminal comprising: means for receiving a message from a first other portable terminal encountering the portable terminal; means for determining a life of the message; and means for transmitting the received message to a second other portable terminal encountering the portable terminal if the life of the message is left.

In the portable terminal according to the fifth aspect of the present invention, the life may be a transfer frequency for transferring the message between the portable terminals, and the portable terminal further comprises means for decreasing the transfer frequency.

In the portable terminal according to the fifth aspect of the invention, the life may be a period since transfer of the message between the portable terminals starts.
Fig. 1 is an explanatory view showing the outline of the operation of a system according to the present invention;
Fig. 2 is a block diagram showing the configuration of the first embodiment according to the present invention;
Fig. 3 is a flow chart showing the operation of a transmit message processing section in the first embodiment;
Fig. 4 is a flow chart showing the operation of a received message processing section in the first embodiment;
Fig. 5 is a block diagram showing the configuration of the second embodiment according to the present invention; and
Fig. 6 is a flow chart showing the operation of the transmit message processing section in the second embodiment.

### FIRST EMBODIMENT

The first embodiment according to the present invention is characterized by limiting an information distribution range to a certain range by relaying to-be-transmitted information among portable information terminals by a preset frequency.

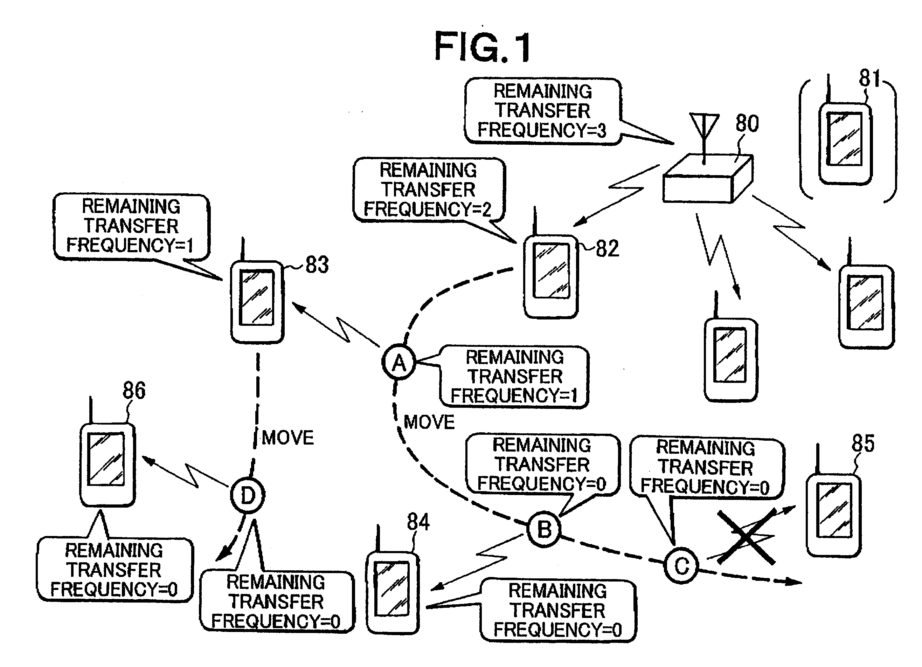

First, the outline of the overall operation of a system will be described with reference to Fig. 1. It is to be noted that the basic concept for the outline of the operation applies to the following other embodiment in common.

A person, who is to transmit information, registers to-be-transmitted information and the frequency for transmitting the information in a fixed station 80 provided at each location or a portable information terminal 81 which the person owns. It is assumed hereafter that the person registers that "information can be transmitted up to three times" including the transmission of the information from the fixed station 80 or portable information terminal 81 which is an information transmission source. Further, to help understand the system, a remaining transmission frequency is shown in each balloon. The method for registering the information and the transmission frequency is not limited to a specific one but various methods may be considered such as a method, for example, by uploading the information and the transmission frequency over a network or directly using input means provided at the fixed station if the information and the transmission frequency are to be transmitted to the fixed station or by using input means provided at the portable information terminal if they are to be transmitted to the portable information terminal. Furthermore, it is unnecessary to link a transmission frequency for transmitting information from the fixed station 80 or the portable information terminal 81 which serves as the transmission source with the registered transmission frequency. The former transmission frequency may be unlimited until data is deleted or may be determined according to the other rule.

Portable information terminals (three portable information terminals in Fig. 1) which chance to pass the fixed station 80 or the portable information terminal 81, receive the registered information and transmittable frequency. Among them, the portable information terminal 82 is assumed to encounter a portable information terminal 83, a portable information terminal 84 and a portable information terminal 85 at points A, B and C, respectively while moving. The portable information terminal 82 can transmit information up to twice since the registered transmission frequency is decreased by one (first transmission from the information source). Therefore, the portable information terminal 82 transmits the received information as well as a remaining transmittable frequency at the time of transmission to each of the portable information terminals 83 and 84 but does not transmit any information and transmission frequency to the portable information terminal 85. Here, as explained as "the remaining transmittable frequency at the time of transmission", the transmittable frequency is naturally decreased by one whenever the information is transmitted.

Likewise, the portable information terminal 83, which receives the information from the portable information terminal 82 at the point A, transmits the information as well as the remaining transmittable frequency at the time of transmission to a portable information terminal 86 which the portable information terminal 83 encounters while moving but transmits nothing to the other terminals which the terminal 83 encounters later on. This is because the remaining transmittable frequency at the time of transmission which the portable information terminal 83 receives is one.

It is noted that if a short-range communication system such as Bluetooth is used for the communication between portable information terminals or between the portable information terminal and the fixed station so as to appropriately set the information transmittable frequency, it is possible to transmit information only to a certain limited range.

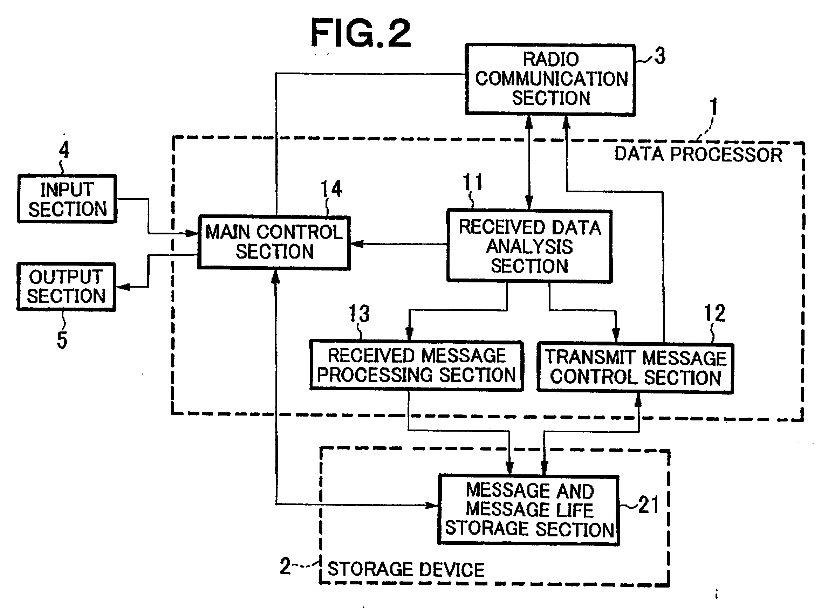

An example of the configuration of the portable information terminal to realize the above-stated operation will next be described with reference to the block diagram of Fig. 2. Information which the above-stated sender is to distribute will be referred to as a " message" and a message transmittable frequency will be referred to as a " message life" hereinafter.

As shown in Fig. 2, the portable information terminal according to the present invention consists of a data processor 1 which operates under the control of a program, a storage device 2 which stores data, a radio communication section 3 which includes the other portable information terminal or a fixed station and a short-range radio communication means, an input section 4 realized by a touch panel, a button or the like, and an output section 5 realized by a liquid crystal display or the like.

The storage device 2 includes a message and message life storage section 21 which store received information (hereinafter referred to as a " message") arid a transmittable frequency for transmitting the information (hereinafter referred to as a "message life").

In addition, the data processor 1 includes a received data analysis section 11 which analyzes data received by the radio communication section 3, notifies the content of the data to an appropriate constituent element, and, if correct information is received, transmits a message receipt acknowledgement notification through the radio communication section 3, a transmit message control section 12 which transmits or controls the message and the message life if the message receipt acknowledgment for terminal detection or message transmission is notified by the received data analysis section 11, a received message processing section 13 which stores a message and a message life in the message life storage section 21 if the received data analysis section 11 notifies the reception of the message and the message life from the other portable terminal or the fixed station, and a main control section 14 which is responsible for ordinary functions as the portable information terminal (such as a user interface and the management of the received message) irrelevant to the present invention.

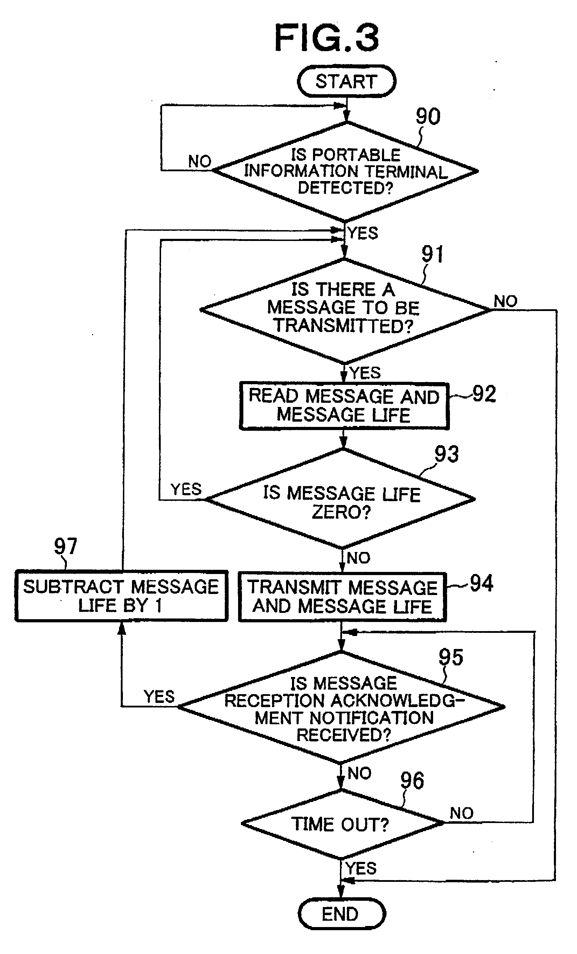

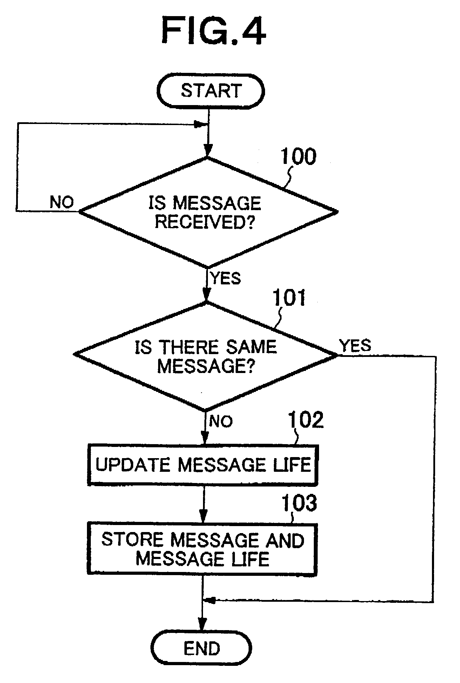

The operation of the transmit message control section 12 and that of the received message processing section 13 which are characteristics of the present invention will next be described with reference to Figs. 3 and 4.

Fig. 3 is a flow chart for explaining the operation of the transmit message processing section 12. Normally, the transmit message processing section 12 continues to await a notification, which indicates the detection of the other portable information terminal, from the received data analysis section 11 (in step S90). When receiving the notification, the transmit message processing section 12 determines whether or not there is a message to be transmitted (in step S91).

If there is no message to be transmitted, the transmit message processing section 12 finishes its processing. If there is a message to be transmitted, the transmit message processing section 12 reads the first message from the message and message life storage section 21 (in step 92) and determines whether or not the life of the message is zero (in step 93). If the message life does not expire yet, the transmit message processing section 12 transmits the message and the message life through the radio communication section 3 (in step 94) and awaits a message receipt acknowledgement notification from a transmission destination (in step 95). If the message receipt acknowledgment notification arrives within a preset period, the transmit message processing section 12 subtracts the message life by one (in step 97) and moves to a processing for the next message. Conversely, if the message life read in the step 92 is zero, the transmit message processing section 12 does not transmit the message and the message life but moves to the processing for the next message.

Further, if the message receipt acknowledgement notification does not arrive within the preset period despite of the reception of the message and the message life ("NO" in step 96), the transmit message processing section 12 considers that the terminal which serves as the transmission destination is out of a communication range and finishes the processing.

Fig. 4 is a flow chart for explaining the operation of the received message processing section 13. Normally, the received message processing section 13 continues to await a notification which indicates the reception of the message and the message life from the received data analysis section 11 (in step 100). When receiving the notification, the received message processing section 13 determines whether or not the message has been received before so as to prevent the same message from being accumulated in the storage section (in step 101). The determination method is not limited to a specific one but various methods may be considered including a global-consistency based method, a method by embedding ID's into messages in advance or the like.

If determining that there is no same message, the received message processing section 13 updates the message life (in step 102) and stores the message and the message life in the storage section 21 (in step 103).

### SECOND EMBODIMENT

The second embodiment according to the present invention is characterized not by utilizing a message transmittable frequency as a message life but by limiting an information distribution range to a certain range while using a time.

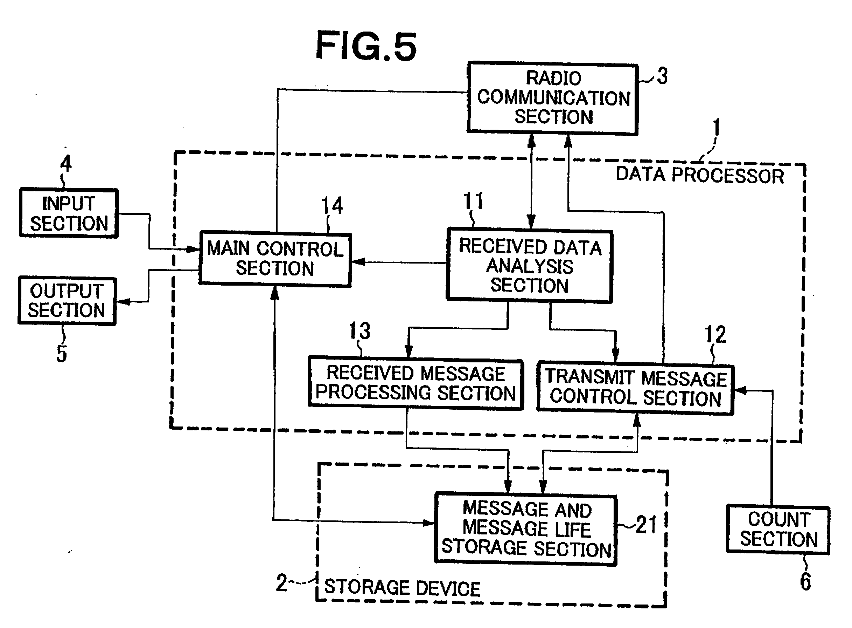

Fig. 5 is a block diagram showing an example of the configuration of a system to realize the second embodiment. The second embodiment differs from the first embodiment in that a count section 6 is added as a constituent element for the system.

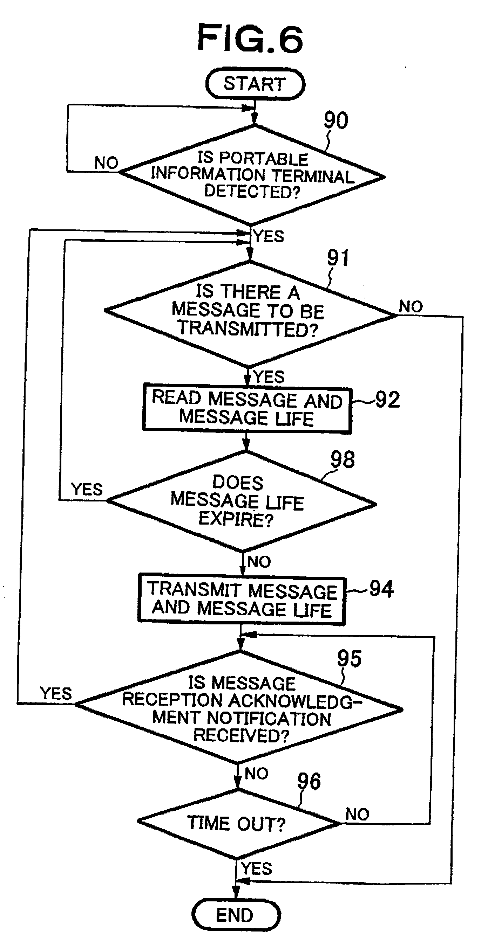

Fig. 6 is a flow chart showing the operation of the transmit message control section 12. The transmit message control section 12 in the second embodiment differs from that of the first embodiment in the following respects. In step 98 which corresponds to step 93 shown in Fig. 3, the transmit message control section 12 determines whether or not the hour or date and hour set for a message life passes using the hour or date and hour counted by the count section 6. Even if receiving a message receipt acknowledgment notification from a transmission destination, the transmit message processing section 12 does not need to update the message life.

Likewise, in the operation of the received message processing section 13, the section 13 does not need to update the message life (step 102 shown in Fig. 4) (although the processing flow of the received message processing section 13 is not shown particularly). Needless to say, it is necessary to update the message life, depending on the description format of the message life, which is within the scope of the present invention.

The two embodiments according to the present invention have been described so far. However, the present invention is not limited to these embodiments. In the embodiments, the portable information terminal which a person carries with him or her has been used. However, the present invention is applicable to every method and apparatus for transferring information by relay using portable terminals each having a short-range radio communication function while conditions are satisfied.

As described so far, the portable information terminal which includes communication means having a narrow communication range (e.g., about two to three meters) transmits a message by relay and the relay frequency and relay time are limited. Therefore, it is possible to provide information to only a certain limited range.

## Claims

1. A message propagation method comprising the steps of:
transmitting a message from a message transmission source apparatus to a first portable terminal; and
repeating transferring the message from an (i-1)^{th} portable terminal to i^{th} terminal encountering the (i-1)^{th} portable terminal in ascending order, for every i which is not greater than an integer n exceeding one.

2. A message propagation method comprising the steps of:
transmitting a message from a message transmission source apparatus to a first portable terminal; and
repeating transferring the message from an (i-1)^{th} portable terminal to i^{th} terminal encountering the (i-1)^{th} portable terminal in ascending order, for an integer i exceeding 1 until a predetermined time elapses since the message is transmitted from the message transmission source apparatus to the first portable terminal.

3. A message propagation system comprising a message transmission source apparatus and a plurality of portable terminals, wherein
one of the portable terminals receives a message from the message transmission source apparatus, and
transfer of the message is repeated between the portable terminals encountering each other until a transfer frequency reaches a predetermined frequency.

4. A message propagation system comprising a message transmission source apparatus and a plurality of portable terminals, wherein
one of the portable terminals receives a message from the message transmission source apparatus, and
transfer of the message is repeated between the portable terminals encountering each other until a predetermined time elapses.

5. A portable terminal comprising:
means for receiving a message from a first other portable terminal encountering the portable terminal;
means for determining a life of the message; and
means for transmitting the received message to a second other portable terminal encountering the portable terminal if the life of the message is left.

6. The portable terminal according to claim 5, wherein
the life is a transfer frequency for transferring the message between the portable terminals, and
the portable terminal further comprises means for decreasing the transfer frequency.

7. The portable terminal according to claim 5 or 6, wherein
the life is a period since transfer of the message between the portable terminals starts.
